# EUROPÄISCHE PATENTSCHRIFT

(11) **EP 0 585 894 B1**
(45) Veröffentlichungstag und Bekanntmachung des Hinweises auf die Patenterteilung: **08.01.1997**
(21) Anmeldenummer: 93113946.3
(22) Anmeldetag: 01.09.1993
(51) Int. Cl.: B60J 5/06

(54) **Faltwurfeinrichtung für Laderaumaufbauverkleidungen von Transportfahrzeugen**
Folding device for tarpaulin of loading area of transport vehicle
Dispositif de pliage pour bâche de plateau de chargement de véhicule de transport

(30) Priorität: 04.09.1992 DE 4229557
(43) Veröffentlichungstag der Anmeldung: 09.03.1994
(73) Patentinhaber: Bruckner, Martin, D-74211 Leingarten (DE)
(72) Erfinder: Bruckner, Martin, D-74211 Leingarten (DE)
(74) Vertreter: Schmid, Rudolf, Dipl.-Ing., Patentanwalt

(56) Entgegenhaltungen:
- GB-A- 2 106 573
- US-A- 4 762 361
- US-A- 4 795 208
- US-A- 5 176 388

## Beschreibung

Die Erfindung betrifft eine Faltenwurfeinrichtung an einer faltbaren Plane von Laderaumaufbauverkleidungen von Transportfahrzeugen zur Sicherung des Ladegutes, wobei die Plane an parallel zueinander verfahrbaren vertikalen Stäben geführt und gehalten ist und durch die Verfahrbarkeit der Stäbe in eine Falt- bzw. Spannposition bringbar ist, und wobei jeweils zwischen zwei der vertikalen Stäbe Verstärkungsmittel angeordnet sind, die den Faltenverlauf in vorbestimmter Richtung lenken.

Transportfahrzeuge aller Art müssen mittels Ladefahrzeugen be- und entladen werden. Die Be- oder Entladung erfolgt herkömmlicherweise von den Seitenfronten her und werden von Gabelstaplern angefahren. Während der Be- und Entladung muß die Ladefläche für solche Ladefahrzeuge ohne Behinderung zugänglich sein. Zum Zwecke der freien Zugänglichkeit der Ladefläche solcher Transportfahrzeuge sind diese mit einem Planenaufbau versehen. Da das Freimachen der Ladefläche durch Wegklappen der Planen sehr umständlich ist und darüber hinaus keine zuverlässige Ladegutsicherung beim Verschließen möglich ist, ist man dazu übergegangen, die Planen schiebetürähnlich am Laderaumaufbau anzuordnen, derart, daß diese durch Zusammenschieben eingefaltet werden können.

Ein solcher Laderaumaufbau ist beispielsweise aus dem deutschen Gebrauchsmuster G 90 15 859.8 bekannt.

Bei einem solchen Laderaumaufbau für Transportfahrzeuge kann die Ladefläche verschlossen werden und das Ladegut während des Transportes gesichert werden, da die Ladefläche durch die faltbare Plane freigegeben wird. Die Plane ist hierbei mit senkrecht positionierten und endseitig geführten Stäben gehalten, welche an einem Ende eine Rollenführung aufweisen und oberhalb des Laderaumaufbaus in einer Schiene geführt sind.

Die Planen weisen hierbei auf der, der Ladefläche zugewandten Seite, Schlaufen oder Köcher auf, die zur Aufnahme der vertikalen Stäbe dienen.

Um zu verhindern, daß bei einer solchen vorgenannten Einrichtung unter Umständen ein ungleichmäßiger Faltenwurf entsteht, der die Faltbarkeit der Plane beeinträchtigt, kann eine Faltenwurfeinrichtung für Laderaumaufbauverkleidungen von Transportfahrzeugen zu vorgesehen sein, mit der ein kontrollierter Faltenwurf garantiert ist.

Die GB-A-2 106 563 beschreibt eine Faltenwurfeinrichtung der eingangs genannten Art, die aus einem bandförmigen Element besteht, das auf halber Länge mit einer Sollknickstelle quer zur Bandlänge versehen ist. Das Band ist horizontal und damit quer zum Faltenlauf zwischen zwei Vertikalverstrebungen angeordnet, so daß die Sollknickstelle etwa mittig zwischen diese Vertikalverstrebungen der Plane zu liegen kommt. Wenn beim Zusammenschieben der Plane die einander benachbarten Vertikalverstrebungen aufeinander zu bewegt werden, knickt das Bandelement an der Sollknickstelle ein und lenkt damit die Faltenbildung an der gewünschten Stelle in die vorbestimmte Richtung. Diese bekannte Einrichtung hat den Nachteil, daß das Band, um die genannte Aufgabe erfüllen zu können, eine gewisse Steifigkeit aufweisen muß. Diese Steifigkeit ist genau gegenläufig zur Schieberichtung der Plane gerichtet. Das heißt zum einen, daß eine Bedienungsperson vermehrt Kraß aufwenden muß, um die Plane zusammenzuschieben, und zum zweiten, daß das Bandelement einem erheblichen Verschleißprozeß unterworfen ist, - nicht nur aufgrund seines direkten Einsatzes, sondern vor allem durch die indirekte Beanspruchung bei der Verschiebebewegung der Plane.

Aus der US-A-762 361 ist eine ähnliche Vorrichtung zur Unterstützung eines geordneten Faltenwurfs bekannt. Diese Vorrichtung besteht aus vier horizontalen - nämlich zwei oberen und zwei unteren und einem vertikalen Element. Alle Elemente sind aus starren Rohrteilen aufgebaut. Die jeweiligen beiden horizontal angeordneten Elementen derselben Höhe sind über eine Gelenkverbindung an dem vertikalen Element befestigt. Diese Gelenkverbindung ist äquivalent zu der in der GB-A-2 106 563 beschriebenen Sollbruchstelle und weist infolgedessen die gleichen Nachteile auf Die vergleichsweise aufwendige Konstruktion der Gelenkverbindung und der einzelnen Elemente macht dies Vorrichtung überdies recht störanfällig, beispielsweise gegen Verbiegen oder auch nur gegen Verkanten, insbesondere beim Zusammenschieben der Plane.

Der vorliegenden Erfindung liegt daher die Aufgabe zugrunde, eine Faltenwurfeinrichtung an einer faltbaren Plane von Laderaumaufbauverkleidungen von Transportfahrzeugen zur Sicherung des Ladegutes zu schaffen, mit der ein kontrollierter Faltenwurf garantiert ist.

Diese Aufgabe wird bei einer Faltenwurfeinrichtung mit den Merkmalen des Oberbegriffs des geltenden Anspruchs 1 durch die Merkmale des kennzeichnenden Teils dieses Anspruchs 1 gelöst.

Besondere Weiterbildungen der Erfindung sind in den Unteransprüchen gekennzeichnet.

Indem in eine Plane von einer Laderaumaufbauverkleidung von Transportfahrzeugen, welche zum Verschließen der Ladefläche und zur Sicherung des Ladegutes dient und an vertikalen Stäben geführt ist und durch die Verfahrbarkeit dieser Vertikalstäbe in eine Falt- oder Spannposition bringbar ist, etwa mittig zwischen zwei Vertikalstäben vertikal angeordnete Verstärkungsmittel eingesetzt sind, wird der Faltenwurf gezielt auf die Achse dieser Verstärkungsmittel gelegt und durch die in diesem Bereich positionierte Zugfeder kontrolliert und unterstützt.

Anhand den beigefügten Zeichnungen, die besonders bevorzugte Ausführungsbeispiele der Erfindung zeigen, wird diese nun näher beschrieben.

Dabei zeigen:
- Figur 1: einen LKW mit einem Laderaumaufbau, von dem die Erfindung ausgeht;
- Figur 2: eine schematische Darstellung einer erfindungsgemäßen Faltenwurfeinrichtung von der Laderauminnenseite her gesehen und
- Figur 3: eine Schnittdarstellung mit geknicktem Faltenwurf,
- Figur 4: eine nicht schematische Darstellung der vorliegenden Erfindung.

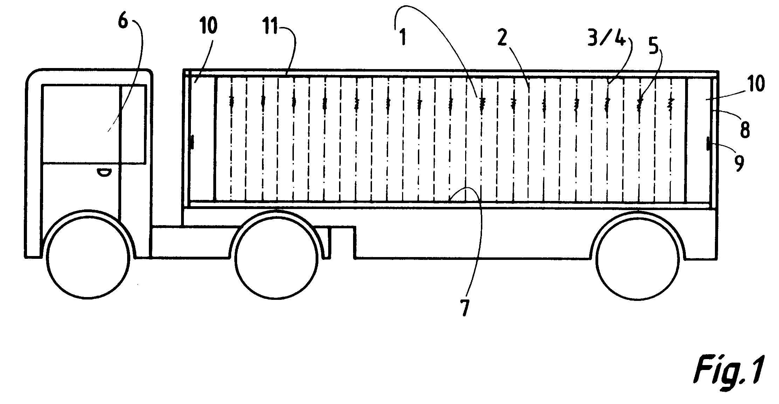

Figur 1 zeigt die erfindungsgemäße Faltenwurfeinrichtung für einen Laderaumaufbau am Beispiel eines Lastkraftwagens 6. Die Ladefläche 7 weist einen bereits angesprochenen Laderaumaufbau 8 auf. Entlang dessen Seitenwand ist die Plane 1 verfahrbar, derart, daß die Plane 1 in sich eingefaltet wird.

Die Plane 1 weist jeweils endseitig eine starre Verkleidungsplatte 10 auf, in der eine Verriegelung 9 integriert ist. Die Plane 1 weist an der Laderauminnenseite, hier nicht sichtbare Schlaufen auf, in denen vertikal positionierte Stäbe 2 eingesetzt sind, so daß die Plane 1 in einzelne Felder eingeteilt wird. Die Vertikalstäbe 2 sind in der oberen Schiene 11 des Laderaumaufbaus 8 geführt.

Nach Lösen der Verriegelung 9 kann die Plane 1 in sich zusammengefaltet werden, so daß die Ladefläche 7 zum Zwecke der Be- und Entladung frei zugänglich ist.

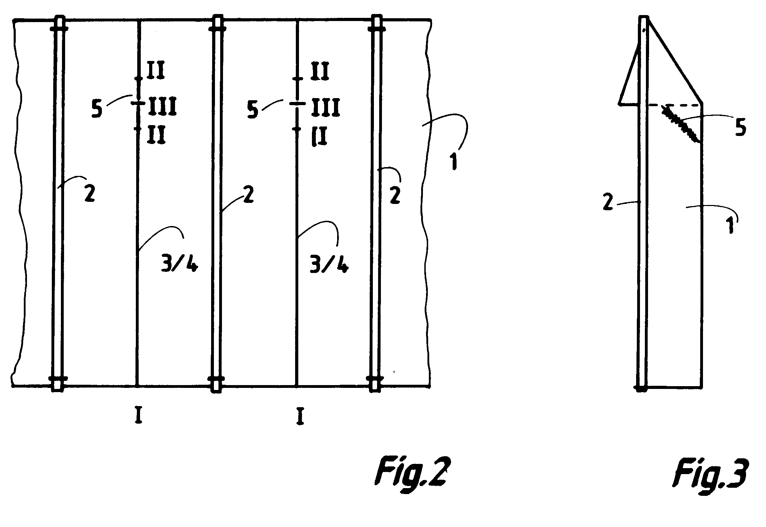

Um einen einwandfreien Faltenwurf der Plane 1 zu gewährleisten, ist nun erfindungsgemäß vorgesehen, beispielsweise in die Plane 1 ein Verstärkungsmittel 3 einzubringen, was in den Figuren 2 und 3 schematisch dargestellt ist.

In Figur 2 wurde jeweils an den mit I gekennzeichneten Stellen, also zwischen die Vertikalstäbe 2, ein Verstärkungsmittel 3 in die Plane 1 eingeschweißt. An den mit II gekennzeichneten Stellen wurde eine Feder 5, im Bereich der Längsachse 4 des Verstärkungsmittels 3 auf Zug eingehängt, damit der Planenaufbau genau an den mit III gekennzeichneten Stellen knickt. Durch diese erfindungsgemäße Anordnung wird die Plane einem sauberen Faltenwurf unterzogen.

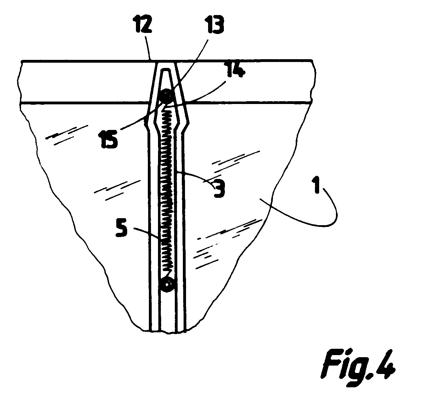

Figur 4 zeigt eine nicht schematische Darstellung der vorliegenden Erfindung. Es ist hierbei der obere Teil der Plane 1 dargestellt. Unter der Zugfeder 5 ist des Verlauf der in die Plane 1 eingebrachten Verstärkungsmittels 3 zu erkennen.

Das Verstärkungsmittel 3 ist im Bereich des oberen Planenrandes 12 von voneinander beabstandeten Nasen 13 durchsetzt. In diese werden die Halteösen 14 der Zugfeder 5 eingehängt. Es ist hierbei von Vorteil, wenn die Nasen 13 beispielsweise durch Schraubenschafte gebildet sind, so daß die Halteösen 14 von aufgedrehten Muttern 15 gegen Herausgleiten gesichert werden können.

Mit der vorliegenen Erfindung wird eine Faltenwurfeinrichtung für eine Verkleidung von Laderaumaufbauten von Transportfahrzeugen geschaffen, bei denen zum Zwecke des Verschließens der Ladefläche und zur Sicherung des Ladegutes eine faltbare Plane vorgesehen ist, die an vertikalen Stäben geführt und gehalten ist und durch die Verfahrbarkeit der Vertikalstäbe die Plane in eine Falt- oder Spannposition bringbar ist.

Erfindungsgemäß wird die Faltenbildung durch Verstärkungseinlagen und Federzugmittel unterstützt bzw. kontrolliert.

### Bezugszeichenliste

- 1: Verkleidung
- 2: Vertikalstäbe
- 3: Verstärkung
- 4: Längsachse
- 5: Zugfeder
- 6: LKW
- 7: Ladefläche
- 8: Laderaumaufbau
- 9: Verriegelung
- 10: Verkleidungsplatte
- 11: obere Schiene von 8
- 12: Planenrand
- 13: Nasen
- 14: Halteösen von 5
- 15: Muttern

## Patentansprüche

1. Faltenwurfeinrichtung an einer faltbaren Plane von Laderaumaufbauverkleidungen von Transportfahrzeugen zur Sicherung des Ladegutes, wobei die Plane an parallel zueinander verfahrbaren vertikalen Stäben geführt und gehalten ist und durch die Verfahrbarkeit der Stäbe in eine Falt- bzw. Spannposition bringbar ist und wobei jeweils zwischen zwei der vertikalen Stäbe Verstärkungsmittel angeordnet sind die den Faltenverlauf in vorbestimmter Richtung lenken, dadurch gekennzeichnet,
daß die Verstärkungsmittel (3) als einstückige, bandförmige Elemente ausgebildet sind,
daß die Verstärkungsmittel (3) mit ihren Längsachsen parallel zu den Längsachsen der Stäbe (2) am oberen Planenrand (12) beginnend angeordnet ist,
daß an jedem Verstärkungsmittel (3) jeweils eine Zugfeder (5) angeordnet ist, daß beide Enden der Zugfeder (5) an dem Verstärkungsmittel (3) angeordnet sind und die Zugfeder (5) in der Spannposition der Plane (1). auf Zug belastet ist.

2. Faltenwurfeinrichtung nach Anspruch 1, dadurch gekennzeichnet, daß die Verstärkungsmittel (3) als Gewebeeinlage vorliegen.

3. Faltenwurfeinrichtung nach Anspruch 1 oder 2, dadurch gekennzeichnet, daß die Verstärkungsmittel (3) in die Plane (1) eingeschweißt sind.

4. Faltenwurfeinrichtung nach einem der Ansprüche 1 bis 3, dadurch gekennzeichnet, daß die Verstärkungsmittel (3) auf der Planenoberfläche aufgebracht sind.

5. Faltenwurfeinrichtung nach einem der Ansprüche 1 bis 4, dadurch gekennzeichnet, daß die Verstärkungsmittel (3) zumindest teilweise in der Plane (1) eingebettet sind.

6. Faltenwurfeinrichtung nach einem der Ansprüche 1 bis 6, dadurch gekennzeichnet, daß die Zugfeder (5) auf der Planeninnenseite angeordnet ist.

7. Faltenwurfeinrichtung nach Anspruch 6, dadurch gekennzeichnet, daß die Zugfeder (5) an dem dem Fahrzeugdach zugewandten Planenrand (12) angeordnet ist.

8. Faltenwurfeinrichtung nach Anspruch 7, dadurch gekennzeichnet, daß die Verstärkungsmittel (3) von mindestens zwei Nasen (13) zur Aufnahme der Zugfeder (5) bzw. deren Ösen (14) durchsetzt sind.

9. Faltenwurfeinrichtung nach einem der Ansprüche 1 bis 8, dadurch gekennzeichnet, daß die Verstärkungsmittel (3) eine Sollknickstelle (III) aufweisen.

## Claims

1. Folding device applied to the foldable tilt of load space body enclosures used on goods vehicles for cargo protection purposes, with the tilt being guided by, and attached to, vertical bars that can be displaced one to or from another, thus - i.e. by the displaceable arrangement of the bars - enabling the tilt to assume either a folded or a taut condition, with reinforcing material being arranged between each pair of bars designed to direct the fold pattern into a given direction,
**wherein**
the longitudinal axes of the reinforcing material (3), beginning at the upper edge of the tilt (12), are arranged in a parallel position to the longitudinal axes of the bars (2);
each reinforcing material (3) is equipped with a tension spring (5);
both ends of the tension spring (5) are attached to the reinforcing material (3); and wherein
the tension spring (5), in the taut condition of the tilt (1), is loaded for tension.

2. Folding device as described in claim 1,
**wherein**
the reinforcing material (3) is applied in the form of a fabric lining.

3. Folding device as described in claims 1 or 2,
**wherein**
the reinforcing material (3) is welded into the tilt (1).

4. Folding device as described in either of claims 1 to 3,
**wherein**
the reinforcing material (3) is applied to the surface of the tilt.

5. Folding device as described in either of claims 1 to 4,
**wherein**
the reinforcing material (3) is, at least in part, embedded in the tilt (1).

6. Folding device as described in either of claims 1 to 5,
**wherein**
the tension spring (5) is arranged on the internal face of the tilt.

7. Folding device as described in claim 6,
**wherein**
the tension spring (5) is arranged at the tilt edge (12) pointing towards the vehicle roof.

8. Folding device as described in claim 7,
**wherein**
the reinforcing material (3) is equipped with at least two lugs (13) designed to receive the tension spring (5) or the tension spring shackles (14), respectively.

9. Folding device as described in either of claims 1 to 8,
**wherein**
the reinforcing material (3) has a predetermined folding point (III).

## Revendications

1. Système de pliage de bâche pliable intégrée au revêtement de la carosserie du compartiment de marchandises de véhicules de transport et utilisée pour protéger la marchandise, dans lequel la bâche est guidée et maintenue par des tiges verticales, mobiles et parallèles les unes aux autres, la bâche pouvant être amenée en position de pliure ou de tension grâce à la mobilité desdites tiges, et dans lequel des renforts placés entre chaque paire de tiges provoquent le pliage dans une direction prédéterminée, caractérisé en ce que
- les renforts (3) sont constitués par des éléments monoblocs en forme de bande,
- les axes longitudinaux des renforts (3) sont placés parallélement aux axes longitudinaux des tiges (2) et commencent au rebord supérieur de la bâche (12),
- chaque renfort (3) est doté d'un ressort de traction (5),
- les deux extrémités du ressort de traction (5) sont fixées sur le renfort (3) et que
- le ressort de traction (5) est tendu lorsque la bâche est en extension.

2. Système de pliage selon la revendication 1, caractérisé en ce que les renforts (3) sont constitués par du textile.

3. Système de pliage selon la revendication 1 ou 2, caractérisé en ce que les renforts (3) sont soudés dans la bâche (1).

4. Système de pliage selon une des revendications 1 à 3, caractérisé en ce que les renforts (3) sont disposés à la surface de la bâche.

5. Système de pliage selon une des revendications 1 à 4, caractérisé en ce que les renforts (3) sont inclus au moins en partie dans la bâche (1).

6. Système de pliage selon une des revendications 1 à 6, caractérisé en ce que le ressort de traction (5) est placé sur la face interne de la bâche.

7. Système de pliage selon la revendication 6, caractérisé en ce que le ressort de traction (5) est disposé sur le rebord de la bâche (12) faisant face au toit du camion.

8. Système de pliage selon la revendication 7, caractérisé en ce que les renforts (3) comportent aux moins deux supports (13) pour recevoir les ressorts de traction (5) ou leurs anneaux (14).

9. Système de pliage selon une des revendications 1 à 8, caractérisé en ce que les renforts (3) présentent une zone de pliure prédéterminée (III).
